# EUROPEAN PATENT SPECIFICATION

(11) **EP 2 993 621 B1**
(45) Date of publication and mention of the grant of the patent: **05.08.2020**
(21) Application number: 15183572.5
(22) Date of filing: 02.09.2015
(51) Int. Cl.: G06K 9/00, G06K 9/62, G06K 9/46, G06T 7/20

(54) **METHOD AND APPARATUS FOR DETECTING SHIELDING AGAINST OBJECT**
VERFAHREN UND VORRICHTUNG ZUR ERKENNUNG EINER ABSCHIRMUNG GEGEN EIN OBJEKT
PROCÉDÉ ET APPAREIL POUR DÉTECTER L'OCCLUSION D'UN OBJET

(30) Priority: 05.09.2014 CN 201410450330
(43) Date of publication of application: 09.03.2016
(73) Proprietor: Ricoh Company, Ltd., Tokyo 143-8555 (JP)
(72) Inventor: LIU, Dianchao, Beijing 100044 (CN); LU, Yaojie, Beijing 100044 (CN); LIU, Yuan, Beijing 100044 (CN); SHI, Zhongchao, Beijing 100044 (CN); HU, Ping, Beijing 100044 (CN)
(74) Representative: White, Duncan Rohan

(56) References cited:
- WO-A1-2014/085025
- US-A1- 2008 095 399
- US-B1- 7 142 600

## Description

### BACKGROUND OF THE INVENTION

### 1. Field of the Invention

The present invention generally relates to image processing, and specifically, a method and an apparatus for detecting shielding against an object.

### 2. Description of the Related Art

Currently, the technology of object detection and tracking is widely used in various fields such as an intelligent transportation system, an image capture system, an intelligent monitoring system or the like. For example, detection and tracking of an object such as a vehicle or a pedestrian in a target scene may be performed for visual identification or vehicle control.

Object matching is an important part in the technology of detection and tracking. An object can be rapidly detected by performing matching between an image of the object in a target scene and a template.

In some target scenes, such as a scene of an urban road, partial shielding or continuous shielding between adjacent objects may often occur; as a result, detection omission, incorrect detection or inaccurate detection often occur. Detecting technology in the prior art cannot solve this problem, because a segmented matching method based on color, gradient, a histogram or the like is usually sensitive to matching objects and it is difficult to detect or analyze shielding of an object. Other robust features for shielding are used together with a machine learning method, thus the detection process takes much time and the detection result cannot be analyzed.

The present invention has an object to provide a method and an apparatus that can detect shielding against an object in a target scene rapidly and efficiently.

As the inventors of the present invention discovered, it can be rapidly, efficiently and accurately detected whether a detection object is shielded, by using an image of the detection object obtained when the detection object is not shielded as a template and performing comparison between the detection object and the template. Accordingly, a method and an apparatus for detecting shielding against an object in a target scene based on template matching are provided.

WO2014/085025A discloses detecting shielding against an object in a target scene by: obtaining an image of the object and a predetermined template image of the object; performing matching between the image and the predetermined template image of the object to obtain a matching result; and detecting, based on the matching result, whether the object is shielded, to obtain a detection result.

The invention is in the method of claim 1 and the apparatus of claim 7.

### BRIEF DESCRIPTION OF THE DRAWINGS

FIG. 1 is a flowchart illustrating a method for detecting shielding against an object in a target scene according to an embodiment of the present invention;
FIG. 2 is a schematic drawing illustrating a disparity map and a gray scale image of a vehicle included in the target scene;
FIG. 3 is a schematic drawing illustrating a template disparity map and a template gray scale image of a vehicle object in FIG. 2;
FIG. 4 is a flowchart illustrating a template matching method for performing matching between an image of the object and a predetermined template image according to an embodiment of the present invention;
FIGs. 5A and 5B are schematic drawings illustrating examples of division of feature cells of the image of the vehicle object and the predetermined template image, respectively;
FIG. 6 is a schematic drawing illustrating an example of low-matching cells in a template matching result of the vehicle object;
FIGs. 7A and 7B are schematic drawings illustrating a disparity value distribution curve and disparity points distribution histogram corresponding to the disparity map of FIG. 6, respectively;
FIG. 8 is a schematic drawing illustrating analysis of shielding in a gray scale image corresponding to the disparity map of FIG. 6;
FIG. 9 is a schematic drawing illustrating a detection result of the vehicle object illustrated in FIG. 2;
FIGs. 10A to 10C are schematic drawings illustrating updating of a template of a next frame according to an embodiment of the present invention;
FIG. 11 is a functional block diagram illustrating an apparatus for detecting the shielding according to an embodiment of the present invention; and
FIG. 12 is a schematic drawing illustrating the hardware configuration of a system for detecting the shielding against the object in the target scene according to an embodiment of the present invention.

### DETAILED DESCRIPTION OF THE PREFERRED EMBODIMENTS

In the following, embodiments of the present invention are described in detail with reference to the accompanying drawings, so as to facilitate the understanding of the present invention.

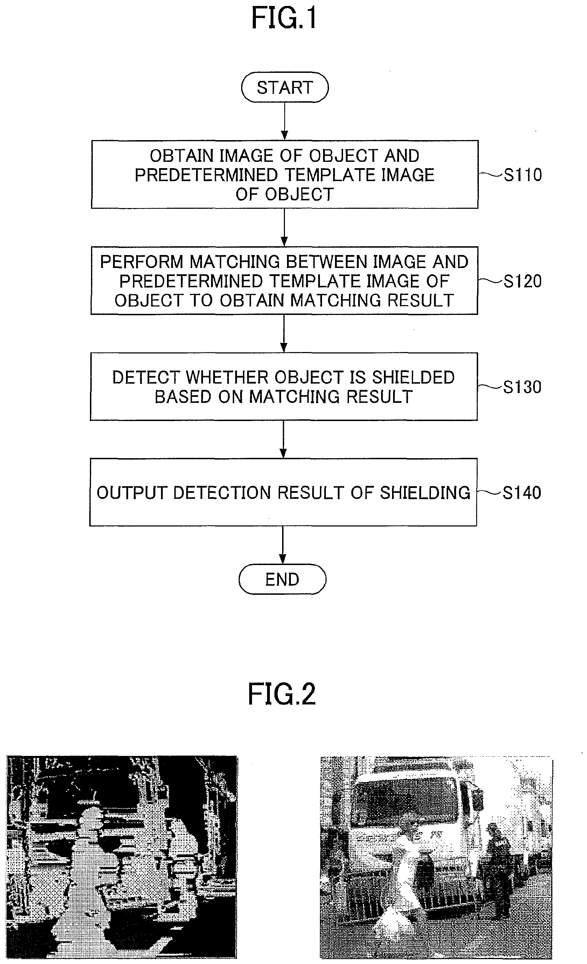

FIG. 1 is a flowchart illustrating a method for detecting shielding against an object in a target scene according to an embodiment of the present invention.

As illustrated in FIG. 1, the detecting method may include: step S110, obtaining an image of the object and a predetermined template image of the object; step S120, performing matching between the image and the predetermined template image of the object to obtain a matching result; step S130, detecting whether the object is shielded based on the matching result; and step S140, outputting a detection result of shielding.

In step S110, the image of the object included in the target scene may be obtained by photographing the target scene using a camera. In detection using a disparity map of the object, for example, left and right images may be obtained by photographing the object using a binocular camera, any one of the left and right images serves as a reference image, and the disparity map of the object is obtained by a stereo matching algorithm. It should be noted that, the method of obtaining the disparity map of the target scene is not limited to this. Additionally, in the following description of the present invention, the detecting method based on a disparity map is described; however the present invention may also be applied to an image other than the disparity map, such as a gray scale image, a radar image, an infrared image or the like. The methods of obtaining these image are known for a person skilled in the art.

After the disparity map of the target scene is obtained, a rough outline of the object to be detected may be obtained by analyzing disparity distribution, and an image including the rough outline of the object in the disparity map may be specified as the image of the object, i.e., the disparity map of the object. For example, FIG. 2 illustrates a disparity map and a gray scale image of a vehicle included in the target scene, where the left drawing is the disparity map and the right drawing is the corresponding gray scale image.

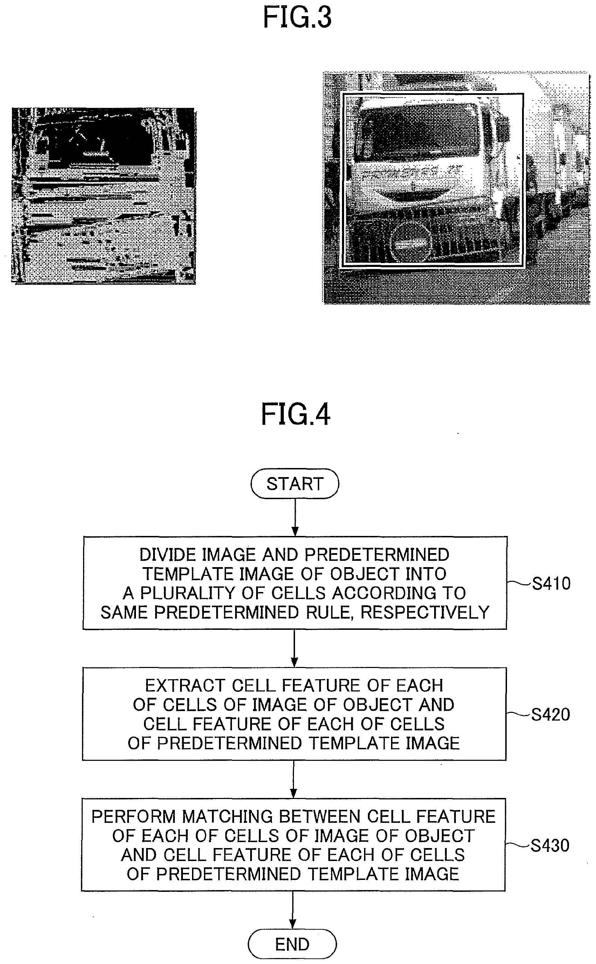

In step S110, the predetermined template image of the object is also obtained. The predetermined template image may be obtained and stored in a memory in advance. For example, the template image may be an image of the object obtained when the object is stationary and is not shielded. The type of the template image and the type of the image of the object to be detected are the same. For example, if the image of the object to be detected is a disparity map or a gray scale image, the template image also is a disparity map or a gray scale image. For example, FIG. 3 illustrates a template disparity map and a corresponding template gray scale image of a vehicle object in FIG. 2, where the left drawing is the template disparity map and the right drawing is the template gray scale image.

Thus, in step S110, the image of the object to be detected and the corresponding template image are obtained. Next, in step S120, matching between the image of the object and the predetermined template image is performed, and a matching result is obtained.

FIG. 4 is a flowchart illustrating a template matching method for performing matching between an image of the object and a predetermined template image according to an embodiment of the present invention. As illustrated in FIG. 4, the template matching method may include: step S410, dividing, according to the same predetermined rule, the image and the predetermined template image of the object into a plurality of cells, respectively; step S420, extracting a cell feature of each of the cells of the image of the object and a cell feature of each of the cells of the predetermined template image; and step S430, performing matching between the cell feature of each of the cells of the image of the object and the cell feature of each of the respective cells of the predetermined template image, to obtain the matching result.

In step S410, the image of the object and the predetermined template image are divided into a plurality of cells, respectively, which is referred to as "feature cells". In order to perform the matching, the image of the object and the predetermined template image may be divided according to the same predetermined rule. The predetermined rule specifies parameters of the shape, the size or the like of the feature cells.

The shape of the feature cells may be a vertical strip shape, a horizontal strip shape, a square grid cell shape or the like. The size of the feature cells may be selected based on specific situations. As an overall principle, in a case where the object is shielded, the size of the feature cells is not greater than the size of an area where the object is shielded. Usually, if the size of the divided cells is too small, the number of times of performing the template matching will be too many, the calculation amount will be large and the detection will be sensitive to noise; and if the size of the divided cells is too large, the detail will be lost and an ideal matching effect cannot be obtained.

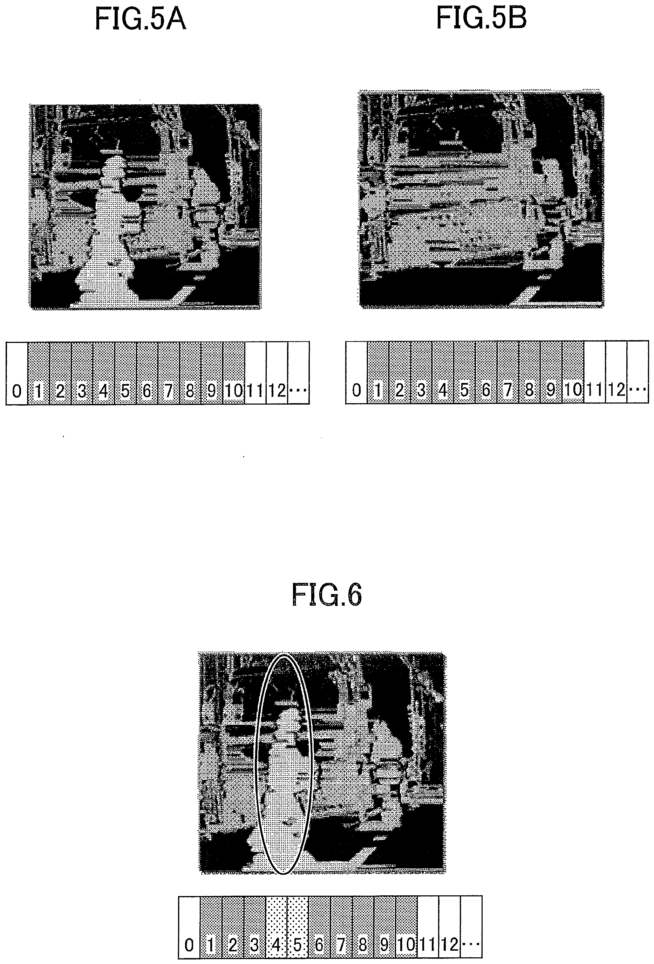

In the present embodiment, the image of the object and the predetermined template image are divided into a plurality of feature cells with a vertical strip shape whose width is the same, respectively. For example, in a case where the object to be detected is the vehicle illustrated in FIG. 2, the disparity map and the template disparity map of the vehicle object are divided into 10 feature cells with a vertical strip shape, respectively. As illustrated in FIG. 5, FIGs. 5A and 5B illustrate 10 complete feature cells obtained by dividing the image of the object and the predetermined template image, whose the numbers are 1-10, respectively.

Preferably, in step S410, before the division of the feature cells is performed, size correspondence between the predetermined template and the image of the object may be evaluated. The purpose of that is to ensure that the matching between the template and the image is performed at a the same size dimension. As is known by a person skilled in the art, the same objects in the image have a similar size in a similar distance, and there is a linear relationship between the change of the size and the change of the distance. For example, in a disparity map, there is an inversely proportional relationship between disparity values and a distance between the object and a lens. Thus, when appropriate parameters of a stereo camera, such as a distance between two lenses, focal length or the like are known, information such as a distance and a size of the object can be calculated. Similarly, for a gray scale image or other images, when distance information and auxiliary information is known, the change of the size can be calculated.

However, in most cases, position or distance of the object does not change drastically in adjacent frames, thus the evaluation step may be omitted and it is considered that the size of the template is approximately equal to that of the image. Furthermore, the feature cell matching method of the present invention has robustness and a size error within a small range can be permitted; thus the evaluation step is an optional step and subsequent processing is not affected so much even though the evaluation step is not performed.

In step S420, for each of the cells of the image of the object and each of the cells of the predetermined template image divided in step S410, an image feature of each of the feature cells is extracted, respectively. In a case where the image of the object and the template image are disparity maps, the image feature may be a disparity distribution feature, such as an outline feature in the disparity map, a histogram of disparity values or the like. It should be noted that, in a case where the image of the object and the template image are other images, the extracted features are other image features in the corresponding images, and for example, in a gray scale image, the extracted image feature may be a gray scale feature, such as an edge feature or the like in the gray scale image.

In step S430, matching between the cell feature of each of the cells of the image of the object and the cell feature of each of the respective cells of the predetermined template image extracted in step S420 is performed, and a matching result is obtained.

In an embodiment, a sliding method may be used to perform the matching between the object image and the template image. For example, the template image may be slid in an area of the object image. A sliding direction may be arbitrarily selected, for example, from left to right, or from the middle to both sides. A step length of the sliding may be determined based on a predetermined rule determined when the image is divided into the feature cells, and for example, the step length may be a size of the feature cell. In a case where the image is divided into feature cells with a vertical strip shape as illustrated in FIG. 5, the step length may be a width of the strip-shape cell.

For each sliding position, feature matching calculation may be performed for each feature cell of the object image and each feature cell of the template image at corresponding positions in an overlapping area. That is to say, a similarity degree of features corresponding to each other is calculated, namely, a matching degree between the cell feature of each cell of the image of the object and the cell feature of the corresponding cell of the template image is calculated; thus an overall matching degree of the sliding position is measured based on the matching degree between all of the feature cells in the image of the object and the corresponding cells of the template image.

In an embodiment, the overall matching degree may be the sum of matching degrees of all of the feature cells in the image of the object. Alternatively, in another embodiment, the overall matching degree may be evaluated based on the sum of mean square errors of matching degrees of all of the feature cells in the image of the object.

After the overall matching degree of a current sliding position is calculated, it is determined whether all of the positions where the matching can be performed have been traversed by the sliding. If all of the positions where the matching can be performed have been traversed, the sliding ends; otherwise, the sliding continues, and for each sliding position, the calculation of the matching degree between each feature cell of the image of the object and the corresponding cell of the template image, and the overall matching degree between the object image and the template image at the sliding position is repeated as described above, until all of the positions where the matching can be performed have been traversed.

And then, an optimal matching position, namely, a matching position with a highest matching degree is determined based on the obtained matching degrees at the sliding positions. Usually, the method of determining an optimal matching degree is a global optimum method, and for example, in a case where the overall matching degree is the sum of the matching degrees of all of the feature cells, a position where the sum of the matching degrees of all of the feature cells is largest is the optimal matching position. Alternatively, in a case where the overall matching degree is evaluated based on the sum of mean square errors of the matching degrees of all of the feature cells, a position where the sum of the mean square errors is smallest is the optimal matching position.

Thus, according to the template matching method, the matching result between the image of the object and the predetermined template image is obtained in step S120. Next, in step S130, it is detected whether the object is shielded based on the matching result obtained in step S120.

The obtained matching result may be analyzed to detect the shielding and predict a shielding area. For example, a matching degree of each feature cell and the corresponding cell of the template image in the current matching result, namely a contribution degree of each feature cell to the overall matching degree may be analyzed, and the detection of the shielding may be performed for feature cells with a low matching degree. The reason for that is that an area whose the matching degree is relatively low is usually an abnormal area, and the abnormality may be caused by a change of its shape or shielding. The feature cell whose the matching degree is relatively low is referred to as "low-matching cell" hereafter.

As an example, a matching degree threshold is previously set, the matching degree between each feature cell and the corresponding cell of the template image in the current matching result is compared to the matching degree threshold, and the feature cells whose the matching degree is lower than the threshold serves as the low-matching cell. The matching degree threshold may be set by a person skilled in the art according to the specific application condition, and for example, the matching degree threshold may be an average value of the matching degrees of all of the feature cells in the matching result. It should be noted that, the matching degree threshold is not limited to this.

As an example of a disparity map of a vehicle in FIG. 2, which is the detection object, FIG. 6 illustrates an example of low-matching cells in a template matching result of the object. For example, the upper drawing of FIG. 6 is a disparity map of the object photographed in the target scene, the lower drawing is a matching result of the feature cells, and the feature cells of numbers 4 and 5 are shown by gray, whose the matching degree is relatively low. As illustrated by the elliptical box in the upper disparity map, the reason for the low matching degrees is that the vehicle is shielded by a front pedestrian.

As described above, it is determined whether there is shielding in the low-shielding cells in the matching result. There are various methods of detecting the shielding. For example, in a case where the image of the object is a disparity map, shielding may be detected by analyzing a disparity distribution feature in a low-matching cell. Additionally, in a case where the image of the object is a gray scale image, shielding may also be detected by analyzing a vertical edge of the gray scale image. It should be noted that, shielding may also be detected by analyzing a depth feature, a color feature, other image features or a combination thereof. An example will be described as follows.

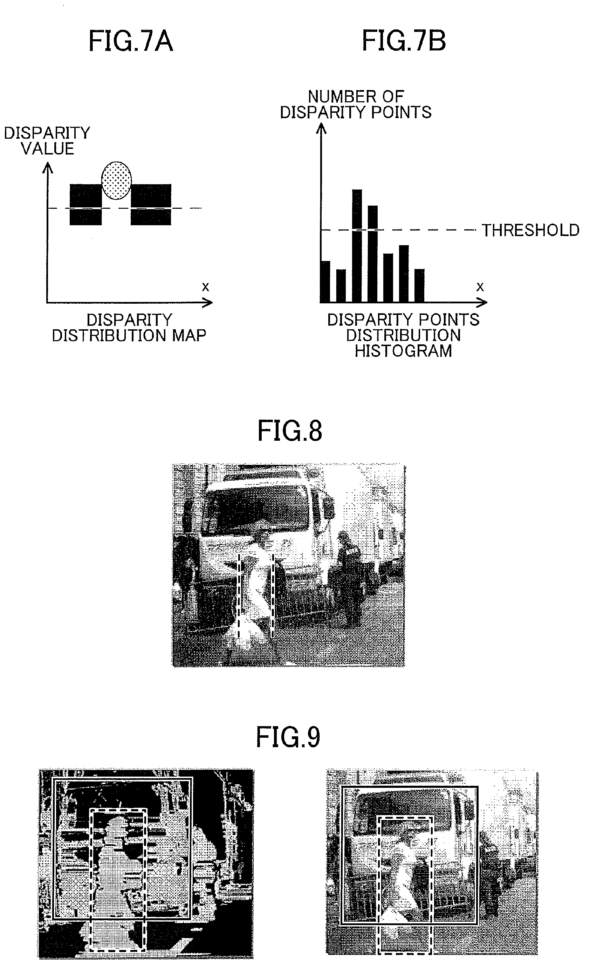

FIG. 7A illustrates a distribution curve of disparity values corresponding to the disparity map of FIG. 6; the x-axis is a x-abscissa that is the same as the image, and the y-axis is distribution of disparity values. As known for a person skilled in the art, the disparity value may represent a distance of the object; the shorter the distance to a camera is, the larger the disparity value of the object is. As illustrated in FIG. 7A, the center position of the disparity distribution is discontinuous, which means that the distribution of disparity points of a surface of the object, i.e., the distance of the object is discontinuous, and the discontinuous area that is closer to the camera has a distribution of disparity points. Thus, it may be determined that the object is shielded by another object in front of the object.

Furthermore, a disparity distribution threshold of the object (such as a vehicle) in the disparity value distribution map, namely a main disparity distribution position of the disparity values of the object on the y-axis in FIG. 7A may be previously determined, and an x-axis position corresponding to disparity distribution that exceeds the threshold may be determined; thus a specific position of the shielding area can be determined based on the determined x-axis position and the determined position of the low-matching cell. As illustrated by the dotted line position in FIG. 7A, the main disparity distribution position may be obtained by analyzing histogram statistics of disparity values. For example, if the x-axis position of the disparity distribution that exceeds the threshold in FIG. 7A corresponds to the position of feature cells of number 4 and 5 in FIG. 6, it may be determined that there is shielding in the feature cells 4 and 5.

FIG. 7B illustrates a disparity points distribution histogram corresponding to the disparity map of FIG. 6, where the x-axis is an x-abscissa that is the same as the image, and the y-axis is the number of the disparity points. Similarly, as illustrated by the dotted line in FIG. 7B, a threshold of the distribution of the disparity points may be previously determined. The threshold may be a predetermined times of an average number of the disparity points of the object in each unit distance on the x-axis, such as 1.2 times of the average number; and alternatively, the threshold may be a predetermined ratio of a maximum number of the disparity points of the object in each unit distance on the x-axis, such as 0.9 times of the maximum number. As illustrated in FIG. 7B, the numbers of the disparity points of the third and fourth bars are clearly higher than the threshold, thus it is determined that there is an object with a closer distance at an x-axis position corresponding to the third and fourth bars. Accordingly, it can be determined that there is a shielding area and a specific positon of the shielding area can be determined based on the determined position of the low-matching cell and the disparity point distribution histogram.

FIG. 8 is a schematic drawing illustrating analysis of shielding in a gray scale image corresponding to the disparity map of FIG. 6. In the gray scale image, the dotted line illustrates an edge feature of an pedestrian shielding the vehicle, which is obtained by analyzing an edge of the gray scale. In a case where the image of the object is a gray scale image, the shielding may also be detected by analyzing a vertical edge of the gray scale image.

It should be noted that, a specific example of determination of the shielding area is described above; however, as known by a person skilled in the art, the method of determining whether there is shielding and determining a specific position of a shielding area may be not limited this.

In this way, in step S130, it is detected whether the object is shielded based on the matching result between the image of the object and the predetermined template image. And then, in step S140, a detection result of the shielding may be outputted to be displayed or be stored for a subsequent processing, and the detection method ends.

For example, FIG. 9 illustrates a detection result of the vehicle object illustrated in FIG. 2, the left drawing being a disparity map and the right drawing being a corresponding gray scale image. According to the above detection method, it can be determined that the object and a target match but the vehicle is shielded in the area in front of the vehicle illustrated by the dotted frame in FIG. 9.

According to the above detection method, the matching between the image of the object and the predetermined template image is performed to obtain the matching result and shielding is detected based on the matching result, thus it can be rapidly detected whether the object is shielded. Furthermore, the matching is performed using feature cells in a template matching process and the detection is performed based on the feature cells in shielding detection, thus a position of a shielding area can be rapidly detected.

In another embodiment, after the detection result of the shielding is obtained, the template may also be updated based on the detection result of the shielding.

Specifically, the stored detection results of the shielding of a current frame and a predetermined number of historical frames may be obtained to determine whether there is continuous shielding. The predetermined number may be set as necessary, and for example, may be 1 frame, 2 frames, 3 frames, 5 frames and so on. If the detection result of the shielding expresses that there is shielding detected in the current frame and a predetermined number of the historical frames, it is determined that there is continuous shielding.

Furthermore, it is determined whether the continuous shielding in the current frame and a predetermined number of the historical frames is caused by the same obstacle. It may be determined by comparing the shielding areas of these frames. For example, it may be determined that the continuous shielding is caused by the same obstacle, if the area of the shielding area of these frames and the disparity distribution are almost the same.

In this way, a track of the obstacle can be determined by analyzing the obstacle in these frames; thus the position of the obstacle in a next frame, namely the shielding area in the next frame can be predicted based on the track and historical position information of the obstacle. There are many methods of predicting the shielding based on historical shielding position information, such as a simple linear addition method, a Kalman filter method, a particle filter method or the like. By using these methods, it can be predicted whether there is shielding and the candidate shielding area can be predicted if there is shielding.

When it is predicted that there is shielding in the next frame, the predetermined template is updated based on the detection result of the shielding in the current frame as a candidate template in a next frame. For example, a feature of a feature cell in the predetermined template corresponding to the predicted shielding area may be updated to a feature of a feature cell in the shielding area detected in the current frame.

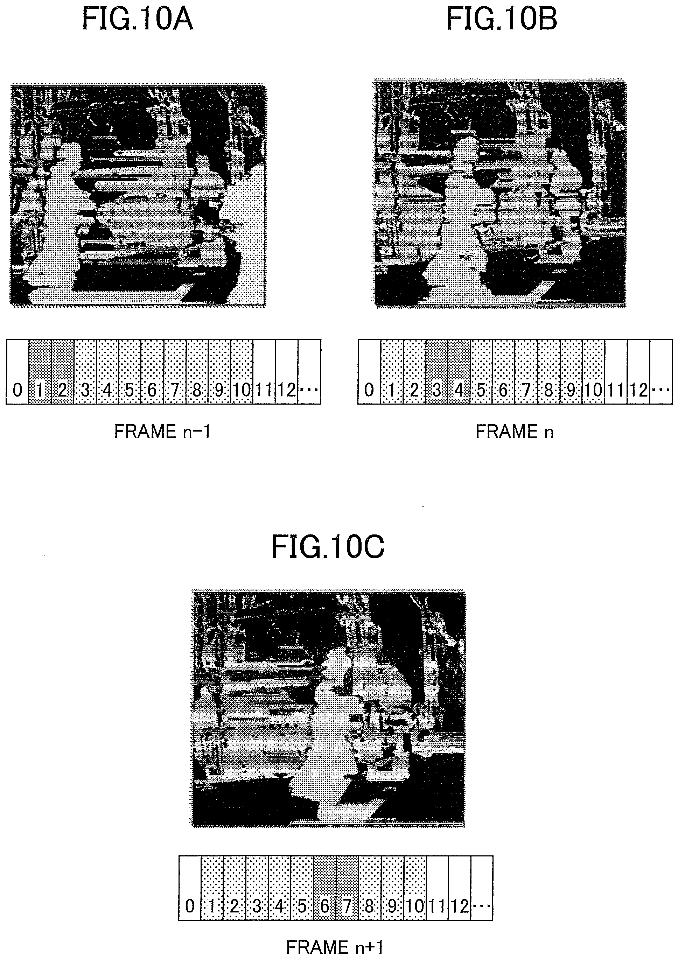

FIGs. 10A to 10C are schematic drawings illustrating updating of a template of a next frame according to an embodiment of the present invention, a template for a next frame (frame n+1) being updated based on the detection results of the shielding in a current frame (frame n) and a previous frame (frame n-1). The upper drawing of FIG. 10A illustrates a disparity map of the frame n-1, and the lower drawing of FIG. 10A illustrates a template matching result (a detection result of shielding) of the frame n-1, the gray feature cells 3-10 representing an area that match a template, the black feature cells 1 and 2 being an area where the shielding is detected. The upper drawing of FIG. 10B illustrates a disparity map of the current frame n, and the lower drawing of FIG. 10B illustrates a template matching result of the current frame n, the gray feature cells 1, 2 and 5-10 representing areas that match templates, the black feature cells 3 and 4 being an area where the shielding is detected. The upper drawing of FIG. 10C illustrates a disparity map of the frame n+1, and the lower drawing of FIG. 10C illustrates a template update status of the frame n+1. As illustrated in FIG. 10C, it is predicted that a shielding area may occur in a position of the feature cells 6 and 7, by analyzing the detection results of the shielding illustrated in FIGs. 10A and 10B; thus cell features of the feature cells 6 and 7 in the template of the frame n+1 are updated to cell features of the feature cells 3 and 4 in the frame n where the shielding exists.

In this way, it may be predicted whether there will be shielding in a next frame based on the detection results of shielding in a current frame and a predetermined number of historical frames, when it is detected that the object is shielded in the current frame. The template image is updated based on the detection result of shielding in the current frame, when it is predicted that there will be shielding in the next frame, the updated template image serving as a candidate template image of the next frame.

The candidate template image may be stored in a memory for performing template matching of the object image in the next frame. For example, a predetermined template of the object is previously stored and the template for updating the next frame is stored; thus, before the template matching is performed, an initial shielding analysis of an image of the next frame may be performed to select the original predetermined template or the updated template based on an analysis result. For example, the selection may be based on a simple analysis of a disparity value histogram, and specifically, when there is disparity distribution exceeding a threshold in the image of the next frame (such as the case illustrated in FIG. 7B), it means that there is an abnormal situation such as shielding in the image, and the updated template may be selected to be used; otherwise the predetermined template may be still used.

In this way, according to the above embodiment, when there is continuous shielding, the template of the next frame is updated based on the detection result of the shielding of the current frame; thus, matching the next frame can be rapidly performed and it can be rapidly detected whether there is shielding in the next frame.

Next, an apparatus for detecting the shielding against the object in the target scene according to an embodiment of the present invention will be described.

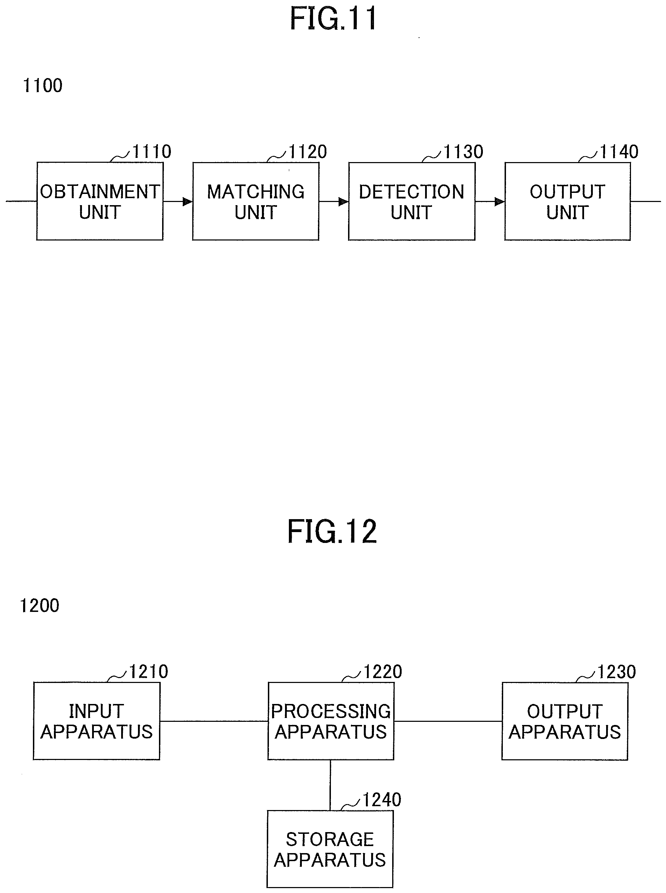

FIG. 11 is a functional block diagram illustrating an apparatus for detecting the shielding according to an embodiment of the present invention. As illustrated in FIG. 11, the shielding detection apparatus 1100 includes: an image obtainment unit 1110 configured to obtain an image of the object and a predetermined template image of the object; a matching unit 1120 configured to perform matching between the image and the predetermined template image of the object to obtain a matching result; a detection unit 1130 configured to detect, based on the matching result, whether the object is shielded; and an output unit 1140 configured to output a detection result of shielding.

Preferably, the matching unit 1120 may include: a cell division unit configured to divide, according to the same predetermined rule, the image and the predetermined template image of the object into a plurality of cells, respectively; a feature extraction unit configured to extract a cell feature of each of the cells of the image of the object and a cell feature of each of the cells of the predetermined template image; and a feature matching unit configured to perform matching between the cell feature of each of the cells of the image of the object and the cell feature of each of the respective cells of the predetermined template image to obtain the matching result.

Preferably, the detection unit 1130 may include: a cell selection unit configured to select, based on the matching result, cells from the cells of the image of the object, whose a matching degree between the cell and corresponding cell of the predetermined template image is lower than a predetermined threshold; and a cell detection unit configured to detect whether the object is shielded in the cells whose the matching degree is lower than the predetermined threshold.

Preferably, the shielding detection apparatus 1100 may further include: a prediction unit configured to predict, based on the detection results of shielding in a current frame and a predetermined number of historical frames, whether the object will be shielded in a next frame, when it is detected by the detection unit 1130 that the object is shielded in the current frame; and an update unit configured to update the template image based on the detection result of shielding in the current frame, when it is predicted that the object will be shielded in the next frame, the updated template image serving as a candidate template image of the next frame.

The operation of the units of the shielding detection apparatus 1100 illustrated in FIG. 11 may refer to the description of the flowchart illustrated in FIG. 1, and the description is omitted here. According to the apparatus for detecting shielding, the matching between the image of the object and the predetermined template image is performed to obtain the matching result and shielding is detected based on the matching result; thus it can be rapidly detected whether the object is shielded. Furthermore, the matching is performed using feature cells in an template matching process and the detection is performed based on the feature cells in shielding detection, thus a position of a shielding area can be rapidly detected.

Next, FIG. 12 illustrates a hardware configuration of a system for detecting the shielding against the object in the target scene according to an embodiment of the present invention. As illustrated in FIG. 12, the system 1200 includes: an input apparatus 1210 for inputting images to be processed from the outside such as left and right images of a target scene photographed by a binocular camera, a disparity map of an object in the target scene or the like, for example, including a keyboard, a mouse, a communication network and a remote input device connected thereto, etc.; a processing apparatus 1220 for implementing the above shielding detection method of the object according to the embodiments of the present invention or the above shielding detection apparatus according to the embodiments of the present invention, such as CPU of a computer or other chips having processing ability, etc., which are connected to a network such as the Internet (not shown) to obtain data such as the disparity map from the network in the process; an output apparatus 1230 for outputting the detection result of shielding that includes a template matching result, a detection result of the shielding or the like to the outside, such as a screen, a printer, a communication network and a remote output device connected thereto, etc.; and a storage apparatus 1240 for storing images, data, the obtained results, commands and intermediate data or the like related to the above shielding detection process, by a volatile method or a nonvolatile method, such as various kinds of volatile or nonvolatile memory including a random-access memory (RAM), a read-only memory (ROM), a hard disk and a semiconductor memory.

It should be noted that, for convenience, FIG. 12 only shows a part of the units of the system related to the present invention, and units such as a bus, input/output ports or the like are omitted. In addition, system 1200 may also include other suitable units based on a specific application condition.

The method, apparatus and system for detecting the shielding against the object according to the embodiments of the present invention are described above in detail with reference to the accompany drawings. As an example, detection of a vehicle in the target scene is described above; however, as known by a person skilled in the art, the detection object of the present invention is not limited to a vehicle, and may also be other moving or stationary objects or buildings. It should be noted that, the obstacle of the target object is not limited to a pedestrian, and may be other moving or stationary objects.

The block diagrams of the units, apparatuses, devices and system are just examples; the connection, placement and configuration illustrated in the block diagrams related to the present invention are not limited to these examples, and the units, apparatuses, devices and system may be connected, placed or configured in any way. The terms "comprise", "include" and "have" are open-form terms, which mean and may be changed into "include and is not limited to". The terms "or" and "and" mean and may be changed into "and/or", unless the context is clearly not. The term "such as" means and may be changed to "such as, but not limited to".

The flowchart and the method according to the present invention are just examples, and not limited to the steps in the embodiments. The steps of the embodiments may be performed in any order. The terms "next", "subsequently" and "then" are just for describing the present invention, and the present invention is not limited to these terms. Furthermore, the articles "a", "an" and "the" should not be limited to the singular element.

The present invention is not limited to the specifically disclosed embodiments, and various modifications, combinations and replacements may be made without departing from the scope of the present invention as claimed.

## Claims

1. A method for detecting shielding against an object in a target scene, the method comprising:
obtaining (S110) an image of the object and a predetermined template image of the object, the types of the template image and the image of the object being the same;
performing (S120) matching between the image and the predetermined template image of the object to obtain a matching result; and
detecting (S130), based on the matching result, whether the object is shielded, to obtain a detection result;
wherein performing (S120) the matching between the image and the predetermined template image of the object comprises:
dividing (S410), according to the same predetermined rule, the image and the predetermined template image of the object into a plurality of cells, respectively;
extracting (S420) a cell feature of each of the cells of the image of the object and a cell feature of each of the cells of the predetermined template image; and
performing (S430) matching;
**characterized in that**:
the predetermined template image is slid in an area of the image of the object, a step length of sliding being based on a predetermined rule, and matching is performed between the cell feature of each of the cells of the image of the object and the cell feature of each of the respective cells of the predetermined template image at corresponding positions in an overlapping area, an overall matching degree of the sliding position being measured based on the matching degree between all of the cell features of each of the cells of the image of the object and corresponding cells of the predetermined template, whereby an optimal matching position is a sliding position for which the overall matching degree is highest, this matching degree being the matching result;
the method further comprising:
predicting, based on a matching degree of each cell of the image of the object and each corresponding cell of the predetermined template image in a current frame (n) of cells of the image and a predetermined number of historical frames (n-1), whether the object will be shielded in cells of a next frame (n+1), when it is detected that the object is shielded in cells of the current frame; and
updating the template image for use in the next frame to a template in which the cells corresponding to a shielding area are identified by predicting the position of the shielding area from an analysis of the detection result of shielding in the current frame (n) and the previous frame (n-1), when it is predicted that the object will be shielded in the next frame, the updated template image serving as a candidate template image of the next frame.

2. The method for detecting shielding against an object according to claim 1, wherein
the overall matching degree is determined to be highest if a sum of matching degrees between each cell of the image of the object and each corresponding cell of the predetermined template image is largest, or a sum of mean square errors of matching degrees between each cell of the image of the object and each corresponding cell of the predetermined template image is smallest.

3. The method for detecting shielding against an object according to claim 1 or 2, wherein detecting whether the object is shielded based on the matching result comprises:
selecting, based on the matching result, cells from the cells of the image of the object, whose matching degree between the cell and corresponding cell of the predetermined template image is lower than a predetermined threshold; and
detecting whether the object is shielded in the cells whose the matching degree is lower than the predetermined threshold.

4. The method for detecting shielding against an object according to any preceding claim, wherein
an analysis of at least one of a disparity distribution feature, a depth feature, a color feature and an edge feature that are image features is performed for detecting whether the object is shielded.

5. The method for detecting shielding against an object according to any preceding claim, wherein updating the template image comprises:
updating, using cells (3-4) in the image of the current frame for which the object is shielded, corresponding cells in the template image.

6. The method for detecting shielding against an object according to any one of claims 1 to 5, the method further comprising:
outputting (S140) the detection result.

7. An apparatus for detecting shielding against an object in a target scene, the apparatus comprising:
an image obtainment unit (1110) configured to obtain an image of the object and a predetermined template image of the object, the types of the template image and the image of the object being the same;
a matching unit (1120) configured to perform matching between the image and the predetermined template image of the object to obtain a matching result; and
a detection unit (1130) configured to detect, based on the matching result, whether the object is shielded, to obtain a detection result;
wherein the matching unit (1120) comprises:
a cell division unit configured to divide, according to the same predetermined rule, the image and the predetermined template image of the object into a plurality of cells, respectively;
a feature extraction unit configured to extract a cell feature of each of the cells of the image of the object and a cell feature of each of the cells of the predetermined template image; and
a feature matching unit configured to perform matching wherein the predetermined template image is slid in an area of the image of the object, a step length of sliding being based on a predetermined rule, and matching is performed between the cell feature of each of the cells of the image of the object and the cell feature of each of the respective cells of the predetermined template image at corresponding positions in an overlapping area, an overall matching degree of the sliding position being measured based on the matching degree between all of the cell features of each of the cells of the image of the object and corresponding cells of the predetermined template, whereby an optimal matching position is a sliding position for which the overall matching degree is highest, this matching degree being the matching result,
the matching unit being further configured to predict, based on a matching degree of each cell of the image of the object and each corresponding cell of the predetermined template image in a current frame (n) of cells of the image and a predetermined number of historical frames (n-1), whether the object will be shielded in cells of a next frame (n+1), when it is detected that the object is shielded in cells of the current frame; and to update the template image for use in the next frame to a template in which the cells corresponding to a shielding area are identified by predicting the position of the shielding area from an analysis of the detection result of shielding in the current frame (n) and the previous frame (n-1), when it is predicted that the object will be shielded in the next frame, the updated template image serving as a candidate template image of the next frame.

8. The apparatus for detecting shielding against an object according to claim 7, wherein the detection unit comprises:
a cell selection unit configured to select, based on the matching result, cells from the cells of the image of the object, whose a matching degree between the cell and corresponding cell of the predetermined template image is lower than a predetermined threshold; and
a cell detection unit configured to detect whether the object is shielded in the cells whose the matching degree is lower than the predetermined threshold.

9. The apparatus for detecting shielding against an object according to claims 7 or claim 8, the apparatus further comprising:
an output unit (1140) configured to output the detection result.

## Patentansprüche

1. Verfahren zum Detektieren einer Abschirmung gegen ein Objekt in einer Zielszene, das Verfahren umfassend:
Erlangen (S110) eines Bilds des Objekts und eines im Voraus bestimmten Schablonenbilds des Objekts, wobei die Typen des Schablonenbilds und des Bilds des Objekts die gleichen sind;
Durchführen (S120) von Abgleichung zwischen dem Bild und dem im Voraus bestimmten Schablonenbild des Objekts, um ein Abgleichungsergebnis zu erzielen; und
Detektieren (S130), basierend auf dem Abgleichungsergebnis, ob das Objekt abgeschirmt ist, um ein Detektionsergebnis zu erzielen;
wobei Durchführen (S120) der Abgleichung zwischen dem Bild und dem im Voraus bestimmten Schablonenbild des Objekts umfasst:
Aufteilen (S410), gemäß der gleichen im Voraus bestimmten Regel, des Bilds bzw. des im Voraus bestimmten Schablonenbilds des Objekts in eine Vielzahl von Zellen;
Extrahieren (S420) eines Zellmerkmals von jeder der Zellen des Bilds des Objekts und eines Zellmerkmals von jeder der Zellen des im Voraus bestimmten Schablonenbilds; und
Durchführen (S430) einer Abgleichung;
**dadurch gekennzeichnet, dass**:
das im Voraus bestimmte Schablonenbild in einen Bereich des Bilds des Objekts gleiten gelassen wird, wobei eine Schrittlänge des Gleitens auf einer im Voraus bestimmten Regel basiert, und wobei Abgleichen zwischen dem Zellmerkmal jeder der Zellen des Bilds des Objekts und dem Zellmerkmal jeder der jeweiligen Zellen des im Voraus bestimmten Schablonenbilds an korrespondierenden Positionen in einem überlappenden Bereich durchgeführt wird, wobei ein gesamter Abgleichungsgrad der Gleitposition basierend auf dem Abgleichungsgrad zwischen sämtlichen der Zellmerkmale jeder der Zellen des Bilds des Objekts und korrespondierenden Zellen der im Voraus bestimmten Schablone gemessen wird, wodurch eine optimale Abgleichungsposition eine Gleitposition ist, für die der gesamte Abgleichungsgrad am höchsten ist, wobei dieser Abgleichungsgrad das Abgleichungsergebnis ist;
das Verfahren ferner umfassend:
Vorhersagen, basierend auf einem Abgleichungsgrad jeder Zelle des Bilds des Objekts und jeder korrespondierenden Zelle des im Voraus bestimmten Schablonenbilds in einem gegenwärtigen Rahmen (n) von Zellen des Bilds und einer im Voraus bestimmten Anzahl von historischen Rahmen (n-1), ob das Objekt in Zellen eines nächsten Rahmens (n+1) abgeschirmt sein wird, wenn detektiert wird, dass das Objekt in Zellen des gegenwärtigen Rahmens abgeschirmt ist; und
Aktualisieren des Schablonenbilds zur Verwendung in dem nächsten Rahmen zu einer Schablone, in der die Zellen korrespondierend mit einem Abschirmungsbereich durch Vorhersagen der Position des Abschirmungsbereichs aus einer Analyse des Detektionsergebnisses der Abschirmung in dem gegenwärtigen Rahmen (n) und dem vorherigen Rahmen (n-1) identifiziert werden, wenn vorhergesagt wird, dass das Objekt in dem nächsten Rahmen abgeschirmt sein wird, wobei das aktualisierte Schablonenbild als ein Kandidaten-Schablonenbild des nächsten Rahmens dient.

2. Verfahren zum Detektieren von Abschirmung gegen ein Objekt nach Anspruch 1, wobei
der gesamte Abgleichungsgrad bestimmt wird, am höchsten zu sein, wenn eine Summe von Abgleichungsgraden zwischen jeder Zelle des Bilds des Objekts und jeder korrespondierenden Zelle des im Voraus bestimmten Schablonenbilds am größten ist oder eine Summe von mittleren quadratischen Fehlern von Abgleichungsgraden zwischen jeder Zelle des Bilds des Objekts und jeder korrespondierenden Zelle des im Voraus bestimmten Schablonenbilds am kleinsten ist.

3. Verfahren zum Detektieren von Abschirmung gegen ein Objekt nach Anspruch 1 oder 2, wobei Detektieren, ob das Objekt abgeschirmt ist, basierend auf dem Abgleichungsergebnis umfasst:
Auswählen, basierend auf dem Abgleichungsergebnis, von Zellen aus den Zellen des Bilds des Objekts, deren Abgleichungsgrad zwischen der Zelle und der korrespondierenden Zelle des im Voraus bestimmten Schablonenbilds kleiner ist als ein im Voraus bestimmter Schwellenwert; und
Detektieren, ob das Objekt abgeschirmt ist, in den Zellen, deren Abgleichungsgrad kleiner ist als der im Voraus bestimmte Schwellenwert.

4. Verfahren zum Detektieren von Abschirmung gegen ein Objekt nach einem der vorstehenden Ansprüche, wobei
eine Analyse mindestens eines von einem Ungleichheitsverteilungsmerkmal, einem Tiefenmerkmal, einem Farbmerkmal und einem Randmerkmal, welche Bildmerkmale sind, durchgeführt wird, um zu detektieren, ob das Objekt abgeschirmt ist.

5. Verfahren zum Detektieren von Abschirmung gegen ein Objekt nach einem der vorstehenden Ansprüche, wobei Aktualisieren des Schablonenbilds umfasst:
Aktualisieren unter Verwendung von Zellen (3-4) in dem Bild des gegenwärtigen Rahmens, für die das Objekt abgeschirmt ist, von korrespondierenden Zellen in dem Schablonenbild.

6. Verfahren zum Detektieren von Abschirmung gegen ein Objekt nach einem der Ansprüche 1 bis 5, das Verfahren ferner umfassend:
Ausgeben (S140) des Detektionsergebnisses.

7. Vorrichtung zum Detektieren von Abschirmung gegen ein Objekt in einer Zielszene, die Vorrichtung umfassend:
eine Bilderlangungseinheit (1110), konfiguriert zum Erlangen eines Bilds des Objekts und eines im Voraus bestimmten Schablonenbilds des Objekts, wobei die Typen des Schablonenbilds und des Bilds des Objekts die gleichen sind;
eine Abgleichungseinheit (1120), konfiguriert zum Durchführen von Abgleichung zwischen dem Bild und dem im Voraus bestimmten Schablonenbild des Objekts, um ein Abgleichungsergebnis zu erzielen; und
eine Detektionseinheit (1130), konfiguriert zum Detektieren, basierend auf dem Abgleichungsergebnis, ob das Objekt abgeschirmt ist, um ein Detektionsergebnis zu erzielen;
wobei die Abgleichungseinheit (1120) umfasst:
eine Zellaufteilungseinheit, konfiguriert zum Aufteilen, gemäß der gleichen im Voraus bestimmten Regel, des Bilds bzw. des im Voraus bestimmten Schablonenbilds des Objekts in eine Vielzahl von Zellen;
eine Merkmalsextraktionseinheit, konfiguriert zum Extrahieren eines Zellmerkmals jeder der Zellen des Bilds des Objekts und eines Zellmerkmals jeder der Zellen des im Voraus bestimmten Schablonenbilds; und
eine Merkmalsabgleichungseinheit, konfiguriert zum Durchführen von Abgleichung; wobei das im Voraus bestimmte Schablonenbild in einen Bereich des Bilds des Objekts gleiten gelassen wird, wobei eine Schrittlänge des Gleitens auf einer im Voraus bestimmten Regel basiert, und wobei Abgleichen zwischen dem Zellmerkmal jeder der Zellen des Bilds des Objekts und dem Zellmerkmal jeder der jeweiligen Zellen des im Voraus bestimmten Schablonenbilds an korrespondierenden Positionen in einem überlappenden Bereich durchgeführt wird, wobei ein gesamter Abgleichungsgrad der Gleitposition basierend auf dem Abgleichungsgrad zwischen sämtlichen der Zellmerkmale jeder der Zellen des Bilds des Objekts und korrespondierenden Zellen der im Voraus bestimmten Schablone gemessen wird, wodurch eine optimale Abgleichungsposition eine Gleitposition ist, für die der gesamte Abgleichungsgrad am höchsten ist, wobei dieser Abgleichungsgrad das Abgleichungsergebnis ist;
wobei die Abgleichungseinheit ferner konfiguriert ist zum Vorhersagen, basierend auf einem Abgleichungsgrad jeder Zelle des Bilds des Objekts und jeder korrespondierenden Zelle des im Voraus bestimmten Schablonenbilds in einem gegenwärtigen Rahmen (n) von Zellen des Bilds und einer im Voraus bestimmten Anzahl von historischen Rahmen (n-1), ob das Objekt in Zellen eines nächsten Rahmens (n+1) abgeschirmt sein wird, wenn detektiert wird, dass das Objekt in Zellen des gegenwärtigen Rahmens abgeschirmt ist; und zum Aktualisieren des Schablonenbilds zur Verwendung in dem nächsten Rahmen zu einer Schablone, in der die Zellen korrespondierend mit einem Abschirmungsbereich durch Vorhersagen der Position des Abschirmungsbereichs aus einer Analyse des Detektionsergebnisses der Abschirmung in dem gegenwärtigen Rahmen (n) und dem vorherigen Rahmen (n-1) identifiziert werden, wenn vorhergesagt wird, dass das Objekt in dem nächsten Rahmen abgeschirmt sein wird, wobei das aktualisierte Schablonenbild als ein Kandidaten-Schablonenbild des nächsten Rahmens dient.

8. Vorrichtung zum Detektieren von Abschirmung gegen ein Objekt nach Anspruch 7, wobei die Detektionseinheit umfasst:
eine Zellauswahleinheit, konfiguriert zum Auswählen, basierend auf dem Abgleichungsergebnis, von Zellen aus den Zellen des Bilds des Objekts, deren Abgleichungsgrad zwischen der Zelle und der korrespondierenden Zelle des im Voraus bestimmten Schablonenbilds kleiner ist als ein im Voraus bestimmter Schwellenwert; und
eine Zelldetektionseinheit, konfiguriert zum Detektieren, ob das Objekt in den Zellen, deren Abgleichungsgrad kleiner ist als der im Voraus bestimmte Schwellenwert, abgeschirmt ist.

9. Vorrichtung zum Detektieren von Abschirmung gegen ein Objekt nach Anspruch 7 oder Anspruch 8, die Vorrichtung ferner umfassend:
eine Ausgabeeinheit (1140), konfiguriert zum Ausgeben des Detektionsergebnisses.

## Revendications

1. Procédé de détection de blindage contre un objet dans une scène cible, le procédé comprenant les étapes consistant à :
obtenir (S 110) une image de l'objet et une image modèle prédéterminée de l'objet, les types de l'image modèle et de l'image de l'objet étant les mêmes ;
mettre en œuvre (S120) une mise en correspondance entre l'image et l'image modèle prédéterminée de l'objet pour obtenir un résultat de mise en correspondance ; et
détecter (S130), sur la base du résultat de mise en correspondance, si l'objet est blindé, pour obtenir un résultat de détection ;
dans lequel l'étape de mise en œuvre (S120) de la mise en correspondance entre l'image et l'image modèle prédéterminée de l'objet comprend les étapes consistant à :
diviser (S410), selon la même règle prédéterminée, l'image et l'image modèle prédéterminée de l'objet en une pluralité de cellules, respectivement ;
extraire (S420) une caractéristique de cellule de chacune des cellules de l'image de l'objet et une caractéristique de cellule de chacune des cellules de l'image modèle prédéterminée ; et
mettre en œuvre (S430) une mise en correspondance ;
**caractérisé en ce que** :
l'image modèle prédéterminée est glissée dans une zone de l'image de l'objet, une longueur de pas de glissement étant basée sur une règle prédéterminée, et la mise en correspondance est mise en œuvre entre la caractéristique de cellule de chacune des cellules de l'image de l'objet et la caractéristique de cellule de chacune des cellules respectives de l'image modèle prédéterminée à des positions correspondantes dans une zone de chevauchement, un degré de correspondance global de la position de glissement étant mesuré sur la base du degré de correspondance entre toutes les caractéristiques de cellule de chacune des cellules de l'image de l'objet et des cellules correspondantes du modèle prédéterminé, moyennant quoi une position de correspondance optimale est une position de glissement pour laquelle le degré de correspondance global est le plus élevé, ce degré de correspondance étant le résultat de mise en correspondance ;
le procédé comprenant en outre les étapes consistant à :
prédire, sur la base d'un degré de correspondance de chaque cellule de l'image de l'objet et de chaque cellule correspondante de l'image modèle prédéterminée dans une trame en cours (n) de cellules de l'image et d'un nombre prédéterminé de trames historiques (n-1), si l'objet sera blindé dans des cellules d'une trame successive (n+1), lorsqu'il est détecté que l'objet est blindé dans des cellules de la trame en cours ; et
mettre à jour l'image modèle à des fins d'utilisation dans la trame successive, en un modèle dans lequel les cellules correspondant à une zone de blindage sont identifiées en prédisant la position de la zone de blindage à partir d'une analyse du résultat de détection de blindage dans la trame en cours (n) et la trame précédente (n-1), lorsqu'il est prédit que l'objet sera blindé dans la trame successive, l'image modèle mise à jour servant d'image modèle candidate de la trame successive.

2. Procédé de détection de blindage contre un objet selon la revendication 1, dans lequel :
le degré de correspondance global est déterminé comme étant le plus élevé si une somme de degrés de correspondance entre chaque cellule de l'image de l'objet et chaque cellule correspondante de l'image modèle prédéterminée est la plus grande, ou si une somme d'erreurs quadratiques moyennes de degrés de correspondance entre chaque cellule de l'image de l'objet et chaque cellule correspondante de l'image modèle prédéterminée est la plus petite.

3. Procédé de détection de blindage contre un objet selon la revendication 1 ou 2, dans lequel l'étape consistant à détecter si l'objet est blindé sur la base du résultat de mise en correspondance comprend les étapes consistant à :
sélectionner, sur la base du résultat de mise en correspondance, des cellules parmi les cellules de l'image de l'objet, dont le degré de correspondance entre la cellule et une cellule correspondante de l'image modèle prédéterminée est inférieur à un seuil prédéterminé ; et
détecter si l'objet est blindé dans les cellules dont le degré de correspondance est inférieur au seuil prédéterminé.

4. Procédé de détection de blindage contre un objet selon l'une quelconque des revendications précédentes, dans lequel :
une analyse d'au moins une parmi une caractéristique de répartition de disparité, une caractéristique de profondeur, une caractéristique de couleur et une caractéristique de bord, lesquelles sont des caractéristiques d'image, est mise en œuvre pour détecter si l'objet est blindé.

5. Procédé de détection de blindage contre un objet selon l'une quelconque des revendications précédentes, dans lequel l'étape de mise à jour de l'image modèle comprend l'étape consistant à :
mettre à jour, en utilisant des cellules (3-4) dans l'image de la trame en cours pour lesquelles l'objet est blindé, des cellules correspondantes dans l'image modèle.

6. Procédé de détection de blindage contre un objet selon l'une quelconque des revendications 1 à 5, le procédé comprenant en outre l'étape consistant à :
fournir en sortie (S 140) le résultat de détection.

7. Appareil destiné à détecter un blindage contre un objet dans une scène cible, l'appareil comprenant :
une unité d'obtention d'image (1110) configurée pour obtenir une image de l'objet et une image modèle prédéterminée de l'objet, les types de l'image modèle et de l'image de l'objet étant les mêmes ;
une unité de mise en correspondance (1120) configurée pour mettre en œuvre une mise en correspondance entre l'image et l'image modèle prédéterminée de l'objet pour obtenir un résultat de mise en correspondance ; et
une unité de détection (1130) configurée pour détecter, sur la base du résultat de mise en correspondance, si l'objet est blindé, pour obtenir un résultat de détection ;
dans lequel l'unité de mise en correspondance (1120) comprend :
une unité de division en cellules configurée pour diviser, selon la même règle prédéterminée, l'image et l'image modèle prédéterminée de l'objet en une pluralité de cellules, respectivement ;
une unité d'extraction de caractéristiques configurée pour extraire une caractéristique de cellule de chacune des cellules de l'image de l'objet et une caractéristique de cellule de chacune des cellules de l'image modèle prédéterminée ; et
une unité de mise en correspondance de caractéristiques configurée pour mettre en œuvre une mise en correspondance, dans lequel l'image modèle prédéterminée est glissée dans une zone de l'image de l'objet, une longueur de pas de glissement étant basée sur une règle prédéterminée, et la mise en correspondance est mise en œuvre entre la caractéristique de cellule de chacune des cellules de l'image de l'objet et la caractéristique de cellule de chacune des cellules respectives de l'image modèle prédéterminée à des positions correspondantes dans une zone de chevauchement, un degré de correspondance global de la position de glissement étant mesuré sur la base du degré de correspondance entre toutes les caractéristiques de cellule de chacune des cellules de l'image de l'objet et des cellules correspondantes du modèle prédéterminé, moyennant quoi une position de correspondance optimale est une position de glissement pour laquelle le degré de correspondance global est le plus élevé, ce degré de correspondance étant le résultat de mise en correspondance ;
l'unité de mise en correspondance étant en outre configurée pour prédire, sur la base d'un degré de correspondance de chaque cellule de l'image de l'objet et de chaque cellule correspondante de l'image modèle prédéterminée dans une trame en cours (n) de cellules de l'image et d'un nombre prédéterminé de trames historiques (n-1), si l'objet sera blindé dans des cellules d'une trame successive (n+1), lorsqu'il est détecté que l'objet est blindé dans des cellules de la trame en cours, et à mettre à jour l'image modèle à des fins d'utilisation dans la trame successive, en un modèle dans lequel les cellules correspondant à une zone de blindage sont identifiées, en prédisant la position de la zone de blindage à partir d'une analyse du résultat de détection de blindage dans la trame en cours (n) et la trame précédente (n-1), lorsqu'il est prédit que l'objet sera blindé dans la trame successive, l'image modèle mise à jour servant d'image modèle candidate de la trame successive.

8. Appareil destiné à détecter un blindage contre un objet selon la revendication 7, dans lequel l'unité de détection comprend :
une unité de sélection de cellules configurée pour sélectionner, sur la base du résultat de mise en correspondance, des cellules, parmi les cellules de l'image de l'objet, dont le degré de correspondance entre la cellule et la cellule correspondante de l'image modèle prédéterminée est inférieur à un seuil prédéterminé ; et
une unité de détection de cellules configurée pour détecter si l'objet est blindé dans les cellules dont le degré de correspondance est inférieur au seuil prédéterminé.

9. Appareil destiné à détecter un blindage contre un objet selon la revendication 7 ou la revendication 8, l'appareil comprenant en outre :
une unité de sortie (1140) configurée pour fournir en sortie le résultat de détection.
